Europäisches Patentamt

European Patent Office

Office européen des brevets

(11) Veröffentlichungsnummer: **0 512 455 A2**

# EUROPÄISCHE PATENTANMELDUNG

(21) Anmeldenummer: **92107496.9**

(22) Anmeldetag: **04.05.92**

(51) Int. Cl.$^5$: **G01F 1/66**

(30) Priorität: **05.05.91 DE 4114650**

(43) Veröffentlichungstag der Anmeldung:
**11.11.92 Patentblatt 92/46**

(84) Benannte Vertragsstaaten:
**AT BE CH DE DK ES FR GB GR IT LI LU MC NL PT SE**

(71) Anmelder: **Krieg, Gunther, Prof.Dr.Ing.
Im Rennich 12
W-7500 Karlsruhe 41(DE)**

(72) Erfinder: **Schultz, Michael, Dipl.-Ing. (FH)
Gartenstrasse 2
W-6742 Herxheim(DE)**
Erfinder: **Dörnhöfer, Thomas, Dipl.-Ing. (FH)
Haydnstrasse 24
W-7516 Karlsbad 1(DE)**
Erfinder: **Krieg, Gunther, Prof. Dr. Ing.
Im Rennich 12
W-7500 Karlsruhe 41(DE)**

(74) Vertreter: **Dipl.-Ing. Heiner Lichti, Dipl.-Phys.
Dr. Jost Lempert, Dipl.-Ing. Hartmut Lasch
Postfach 41 07 60, Bergwaldstrasse 1
W-7500 Karlsruhe 41(DE)**

(54) **Verfahren und Vorrichtung zur Messung von Volumenströmen in Flüssigkeiten und Gasen.**

(57) Es wird ein Verfahren zur Messung des Volumenstromes von Fluiden in Strömungskanälen unter Einsatz von Ultraschall vorgeschlagen, bei dem zwei Ultraschallsender bzw. Empfänger mit jeweils verschiedener Sendefrequenz so in einem Strömungskanal eingebaut sind, daß ihre ausgesendeten Wellenzüge aufeinander zulaufen, die Geschwindigkeitsvektoren beider Wellen Komponenten in und entgegen der Strömungsrichtung aufweisen und das überlagerte Signal bezüglich seiner Lage auf der Zeitachse ausgewertet wird.

EP 0 512 455 A2

Die Erfindung betrifft eine Vorrichtung sowie ein Verfahren zur Messung der Volumenströme von Fluiden insbesondere von Gasen und Flüssigkeiten entsprechend dem Oberbegriff des Patentanspruchs.

Geräte, die solche Messungen durchführen, sind von mehreren Firmen auf den Markt gebracht worden und sind aus der einschlägigen Literatur bekannt. Dabei werden z.B. magnetisch induktive Durchflussmesser (MID) sowie Flügelradzähler, deren Umdrehungszahlen mit verschiedenen Mitteln abgetastet werden, wie z.B. Leitfähigkeitsmessung, Wirbelstromprinzip, Ultraschallreflexmethode, angewendet. Daneben sind Systeme unter Einsatz von Anemometerprinzipien sowie Wärmeimpulsverfahren bekannt und werden in der Praxis eingesetzt. Ferner werden statische Ultraschallverfahren, bei denen im Strömungsrohr angeordnete Ultraschallsender/Empfänger durch verschiedene Methoden wie z.B. Phasenmessung, Laufzeitmessung, Frequenz-Messung und -Nachführung zur Durchflussmessung angewendet.

Die Systeme gemäß dem Stand der Technik weisen ganz entschiedene Nachteile auf, die in zu hohem Energieverbrauch, in zu hohen Produktionskosten, Verschmutzungsempfindlichkeit, mechanisch bewegten Teilen, zu engem Dynamikbereich, Problemen bei Schleichflüssen und Störungen durch äußere Einflüsse wie z.B. Festkörperpartikel und Luftblasen zu finden sind.

Obwohl die bekannten Ultraschallverfahren einige dieser Probleme lösen, sind sie gekennzeichnet durch hohe Anforderungen an die Präzision der mechanischen Fertigung, durch starke Verluste infolge Multireflexion, durch zeitintensive Such- und Regelvorgänge und hohen Energieverbrauch in Folge. Aus diesen Gründen können diese Systeme nicht mit der genügend hohen Zeitauflösung bei gleichzeitig niedrigen Kosten produziert werden.

Der Erfindung liegt daher die Aufgabe zugrunde, ein verbessertes Verfahren sowie eine verbesserte Vorrichtung zu schaffen, bei denen die obengenannten Nachteile eliminiert sind. Erfindungsgemäß werden dazu in der Strömung gegenläufige Ultraschallsignale unterschiedlicher Frequenz nach Durchlaufen des Fluids überlagert und dabei die Lage des Amplitudenminimums bzw. des Amplitudenmaximums der Überlagerung auf der Zeitachse zur Messung der Durchflussgeschwindigkeit und damit des Volumenstromes herangezogen. Dieses Verfahren und die dazugehörigen Vorrichtungen weisen entscheidende Vorteile auf, die in kurzen Ansprechzeiten, hohem Dynamikbereich, Eignung für Schleichflüsse, extrem niedrigem Energieverbrauch und sehr niedrigen Produktionskosten resultieren.

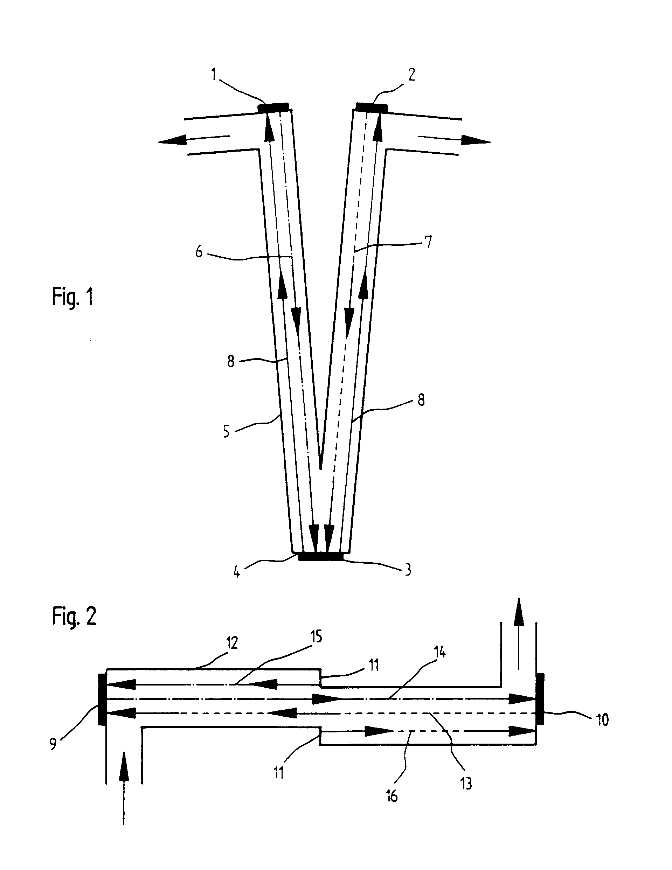

Die Erfindungen sind im folgenden anhand von Ausführungsbeispielen in den Figuren 1, 2, 3, 4 und 5 näher erläutert. Zwei Ultraschallsender/-Empfänger 1, 2; 9, 10; 17, 18; 24, 25 mit verschiedener Frequenz sind in einem Messrohr so eingebaut, daß die ausgesendeten Wellenzüge 6, 7, 13, 14, 21, 22, 27, 28 aufeinander zulaufen. Einer der Sender 1, 9, 17, 24 sendet mit, der andere Sender 2, 10, 18, 25 gegen die Strömungsrichtung des Mediums. Zwischen den beiden Sendern 1, 2; 9, 10; 17, 18; 24, 25 ist entweder ein Empfänger 3, 20 und/oder ein Reflektor 11, 19 so angebracht, daß eine Addition der beiden Ultraschallsignale stattfinden kann. In einer besonders einfachen Ausführung (Fig. 4) können der Reflektor bzw. der dritte Sensor entfallen. In diesem Falle werden die Empangssignale elektrisch addiert, oder einer der beiden Sender 25 wird als Reflektor benutzt, wobei dann die Sensoren 24, 25 simultan mit Signalen beaufschlagt werden und die Sendezeit von Sender 24 so gewählt wird, daß der ausgesendete Wellenzug 28 der Rohrlänge entspricht und der zweite Sender 25 die doppelte Zeit betrieben wird, so daß an der Reflexions- bzw. Additionsstelle das Überlagerungssignal 29 entsteht, welches vom Sensor 24 empfangen wird. Im Falle des Reflektors 4, 11, 19 muß dieser so angebracht sein, daß er das Signal 8, 15, 16, 21, 22 auf einen oder beide der Sender oder auf einen separaten Empfänger reflektiert. Die Sender können auch als Empfänger beschaltet werden. Durch die Addition der beiden in der Frequenz verschiedenen Sendesignale 30, 31 ergibt sich als Summe ein Überlagerungssignal 32, welches zur Bestimmung der Durchflußgeschwindigkeit des Mediums herangezogen wird und somit Maß für die Durchflußmenge ist.

Um die thermische Längenausdehnung des Rohres zu ermitteln, wird die Rohrlänge 1 durch ein Laufzeitverfahren bestimmt, in dem von einem der Sender 1, 9, 17, 24 bzw. 2, 10, 18, 25 ein Impuls ausgesendet wird, der nach Reflexion an den Sensoren 2, 10, 20, 25 bzw. 1, 9, 20, 24 oder an den Reflektoren 11 und 4 empfangen und die Laufzeit dt bestimmt wird nach der Beziehung:
$1 = c/dt$ ( mit c als Schallgeschwindigkeit des Mediums ).

Somit kann die Längenausdehnung bei der Berechnung des Durchflusses berücksichtigt werden.

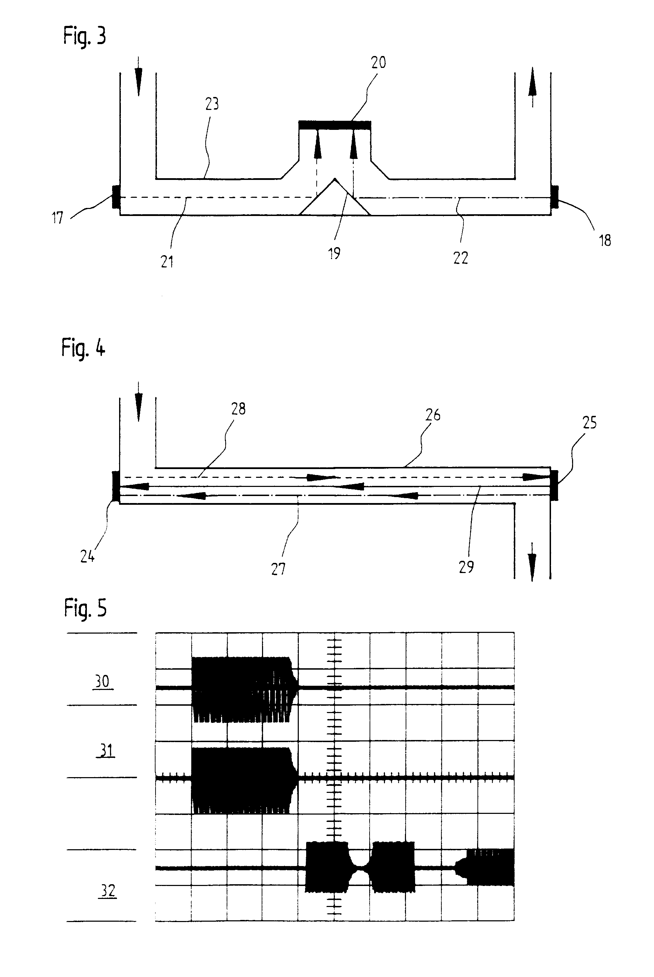

Figur 1 zeigt ein erfindungsgemäßes System mit den Sensoren 1, 2 und 3 und dem Strömungskanal 5. Die Figuren 2, 3 und 4 zeigen mechanische Varianten von Figur 1, wobei Figur 2 durch eine Strahlteilung und Figur 3 durch eine Strahlumlenkung gekennzeichnet sind. In Figur 4 wird im Hinblick auf ein möglichst gerades Meßrohr 26 auf diese Maßnahmen verzichtet und die Signale elektrisch addiert bzw. einer der beiden Sensoren 25 als Reflektor und Überlagerungsstelle benutzt.

Gemäß Figur 1 sind zwei Ultraschallsensoren 1, 2, die sowohl als Ultraschallsender und Empfänger wirken und die mit verschiedenen Frequenzen angeregt werden, so in einem Messrohr 5 eingebaut, daß die beiden ausgesendeten Wellenzüge 6, 7 aufeinander zulaufen und von einem Reflektor 4 zu mindestens einem der Ultraschallempfänger 1, 2 zurückgeworfen werden. Alternativ kann ein Empfänger 3 zur direkten Detektion der Ultraschallsignale 6, 7 der Ultraschallsender 1, 2 herangezogen werden. Zur Auswertung wird das Überlagerungssignal bezüglich seiner Lage auf der Zeitachse, welche ein Maß für die Durchflußmenge ist, herangezogen.

Gemäß Figur 2 sind zwei Ultraschallsensoren 9, 10, die als Ultraschallsender und Empfänger wirken und die mit verschiedenen Frequenzen angeregt werden, so in ein Messrohr 12 eingebaut, daß die Wellenzüge 13, 14 aufeinander zulaufen und von einem Strahlteiler 11 so reflektiert werden, daß ein Teil des Ultraschallsignals 15, 16 in sich zurückläuft. Es werden jeweils ein reflektierter Teilstrahl 15 bzw. 16 von Sensor 9 bzw. 10 und ein nichtreflektierter Teilstrahl 13 bzw. 14 von Sensor 10 bzw. 9 überlagert und an Sensor 9 bzw. 10 empfangen, so daß das Überlagerungssignal bezüglich seiner Lage auf der Zeitachse, welche ein Maß für die Durchflußmenge ist, ausgewertet werden kann.

Gemäß Figur 3 sind zwei Ultraschallsensoren 17, 18, die als Ultraschallsender wirken und die mit verschiedenen Frequenzen angeregt werden, so in ein Messrohr 23 eingebaut, daß die Wellenzüge 21, 22 aufeinander zulaufen und von einem Reflektor 19 so reflektiert werden, daß sie an einem Sensor 20 detektiert werden können. Zur Auswertung wird das Überlagerungssignal bezüglich seiner Lage auf der Zeitachse, welche ein Maß für die Durchflußmenge ist, herangezogen.

Gemäß Figur 4 sind zwei Ultraschallsensoren 24, 25, die als Ultraschallsender und Empfänger wirken und mit verschiedenen Frequenzen angeregt werden, so in ein Meßrohr 26 eingebaut, daß die ausgesendeten Wellenzüge 27, 28 aufeinander zulaufen und die von den Ultraschallsensoren 25, 24 empfangenen Signale elektrisch addiert werden. Eine weitere Möglichkeit der Signalüberlagerung besteht darin, daß einer der beiden Sender 25 als Reflektor benutzt wird, wobei dann die Sensoren 24, 25 simultan mit Signalen beaufschlagt werden und die Sendezeit von Sender 24 so gewählt wird, daß der ausgesendete Wellenzug 28 der Rohrlänge entspricht und der zweite Sender 25 die doppelte Zeit betrieben wird, so daß an der Reflexionsstelle das Überlagerungssignal 29 entsteht, welches vom Sensor 24 empfangen wird, so daß das Überlagerungssignal bezüglich seiner Lage auf der Zeitachse, welche ein Maß für die Durchflußmenge ist, ausgewertet werden kann.

Die Figur 5 zeigt die Sendesignale der Sensoren 1, 2; 9, 10; 17, 18; 24, 25. Als Frequenzen können z.B. f1 = 1.6 MHz (30) und f2 = 1.61 MHz (31) gewählt werden. Die Frequenzen f1 (30) und f2 (31) sollten so gewählt werden, daß beim größten zu erwartenden Durchfluß der Phasenunterschied der Anfangsamplituden der beiden Frequenzen f1 u. f2 an der Überlagerungsstelle (Reflektor 4, 11 bzw. Empfänger 3, 19, 20, 24) kleiner als 180 Grad ist. Voraussetzung hierfür ist ein phasengleiches Senden der Anfangsamplituden der Wellenzüge 6, 7; 13, 14; 21, 22; 27, 28. Die Differenzfrequenz ist so zu wählen, daß die Periode des Überlagerungssignals doppelt so groß ist wie die Laufzeit des Schalls durch das Meßrohr vom Sender bis zur Überlagerungsstelle. Dies ist jedoch nicht zwingend.

**Patentansprüche**

1. Verfahren zur Messung des Volumenstromes von Fluiden in Strömungskanälen unter Einsatz von Ultraschall, dadurch gekennzeichnet, daß zwei Ultraschallsender bzw. Empfänger mit jeweils verschiedener Sendefrequenz so in einem Strömungskanal eingebaut sind, daß ihre ausgesendeten Wellenzüge aufeinander zulaufen und daß die Geschwindigkeitsvektoren beider Wellen Komponenten in und entgegen der Strömungsrichtung aufweisen und daß das überlagerte Signal bezüglich seiner Lage auf der Zeitachse ausgewertet wird.

2. Verfahren nach Anspruch 1, dadurch gekennzeichnet, daß der Phasenunterschied der Anfangsamplituden der beiden Wellenzüge beim Sendebeginn Null ist.

3. Verfahren nach Anspruch 1, dadurch gekennzeichnet, daß die Anfangsamplituden der beiden Wellenzüge einen definierten Phasenunterschied aufweisen.

4. Verfahren nach Anspruch 1 bis 3, dadurch gekennzeichnet, daß ein Reflektor zur Überlagerung der beiden Wellenzüge dient.

5. Verfahren nach Anspruch 1 bis 4, dadurch gekennzeichnet, daß das überlagerte Signal des Reflektors zu mindestens einem der beiden Sender zurückgeführt wird.

6. Verfahren nach Anspruch 1 bis 3, dadurch gekennzeichnet, daß zur Überlagerung und Erfassung der Signale ein dritter Sensor dient.

7. Verfahren nach Anspruch 1 bis 3 und 6, dadurch gekennzeichnet, daß die Signale über einen Reflektor einem dritten Sensor zugeführt werden.

8. Verfahren nach Anspruch 1 bis 3, dadurch gekennzeichnet, daß die empfangenen Signale elektrisch addiert werden.

9. Verfahren nach Anspruch 1 bis 3, dadurch gekennzeichnet, daß einer der beiden Sensoren als Reflektor und Überlagerungsstelle dient.

10. Verfahren nach Anspruch 1 bis 9, dadurch gekennzeichnet, daß die Laufstrecke der Ultraschallsignale mit Hilfe der Laufzeitmethode ermittelt wird und in das Berechnungsverfahren für den Volumenstrom mit einbezogen wird.

11. Vorrichtung zur Messung des Volumenstromes von Fluiden in Strömungskanälen unter Einsatz von Ultraschall, dadurch gekennzeichnet, daß zwei Ultraschallsender 1, 2; 9, 10; 17, 18; 24, 25 bzw. Empfänger mit jeweils verschiedener Sendefrequenz so in einem Strömungskanal 5, 12, 23, 26 eingebaut sind, daß ihre ausgesendeten Wellenzüge 6, 7; 13, 14; 21, 22; 27, 28; 30, 31 aufeinander zulaufen und daß die Geschwindigkeitsvektoren beider Wellen Komponenten in und entgegen der Strömungsrichtung aufweisen und daß das überlagerte Signal 32 bezüglich seiner Lage auf der Zeitachse ausgewertet wird.

12. Vorrichtung nach Anspruch 11, dadurch gekennzeichnet, daß der Phasenunterschied der Anfangsamplituden der beiden Wellenzüge 6, 7; 13, 14; 21, 22; 27, 28; 30, 31 beim Sendebeginn Null ist.

13. Vorrichtung nach Anspruch 11, dadurch gekennzeichnet, daß die Anfangsamplituden der beiden Wellenzüge 6, 7; 13, 14; 21, 22; 27, 28; 30, 31 einen definierten Phasenunterschied aufweisen.

14. Vorrichtung nach Anspruch 11 bis 13, dadurch gekennzeichnet, daß ein Reflektor 4 zur Überlagerung der beiden Wellenzüge 6, 7 dient.

15. Vorrichtung nach Anspruch 11 bis 14, dadurch gekennzeichnet, daß das überlagerte Signal 8 des Reflektors 4 zu mindestens einem der beiden Sender zurückgeführt wird.

16. Vorrichtung nach Anspruch 11 bis 13, dadurch gekennzeichnet, daß zur Überlagerung und Erfassung der Signale 6, 7 ein dritter Sensor 3 dient.

17. Vorrichtung nach Anspruch 11 bis 13, dadurch gekennzeichnet, daß die Wellenzüge 13, 14 aufeinander zulaufen und von einem Strahlteiler 11 so reflektiert werden, daß ein Teil des Ultraschallsignals 15, 16 in sich zurückläuft. Es werden jeweils ein reflektierter Teilstrahl 15 bzw. 16 von Sensor 9 bzw. 10 und ein nichtreflektierter Teilstrahl 13 bzw. 14 von Sensor 10 bzw. 9 überlagert und an Sensor 9 bzw. 10 empfangen.

18. Vorrichtung nach Anspruch 11 bis 13 u. 16, dadurch gekennzeichnet, daß die Signale 21, 22 über einen Reflektor 19 einem dritten Sensor 20 zugeführt werden.

19. Vorrichtung nach Anspruch 11 bis 13, dadurch gekennzeichnet, daß die empfangenen Signale 28, 27 elektrisch addiert werden.

20. Vorrichtung nach Anspruch 11 bis 13, dadurch gekennzeichnet, daß einer der beiden Sensoren 25 als Reflektor und Überlagerungsstelle dient.

21. Vorrichtung nach Anspruch 11 bis 20, dadurch gekennzeichnet, daß die Laufstrecke der Ultraschallsignale mit Hilfe der Laufzeitmethode ermittelt wird und in das Berechnungsverfahren für den Volumenstrom mit einbezogen wird.

Fig. 1

Fig. 2

Fig. 3

Fig. 4

Fig. 5